# DEMANDE DE BREVET EUROPEEN

(11) **EP 1 921 046 A1**
(43) Date de publication de la demande: **14.05.2008**
(21) Numéro de dépôt: 07291355.1
(22) Date de dépôt: 12.11.2007
(51) Int. Cl.: C02F 1/70, C02F 1/76, C02F 1/68, C02F 103/42

(54) **Dispositif de traitement des effluents d'un bassin d'agrément, produit et procédés correspondants**

(30) Priorité: 13.11.2006 FR 0609919
(71) Demandeur: Ocedis, 01600 Trevoux (FR)
(72) Inventeur: Hardy, Claude, 01480 Miserieux (FR)
(74) Mandataire: Martin, Didier Roland Valéry

(57) **Abrégé**

- L'invention concerne un dispositif (1) de traitement des effluents d'un bassin d'agrément, ledit dispositif (1) comportant une unité de traitement (3) conçue pour réduire la teneur en substance désinfectante des effluents et comportant une chambre de réaction (4) conçue pour contenir une substance neutralisante (5) incorporée dans ou sur un substrat (6) solide formé par un ou plusieurs galets se présentant sous un ou plusieurs formats normalisés, ladite chambre de réaction (4) disposant d'un support (14) qui présente un ou plusieurs logements individuels (18) conçus chacun pour accueillir un ou plusieurs desdits galets (7) et dont la capacité d'accueil définit, pour l'un et/ou l'autre desdits formats de galets (7), un dosage prédéterminé de la substance neutralisante (5).
- Dispositifs de traitement d'eau pour bassins d'agrément.

## Description

La présente invention se rapporte au domaine du traitement des effluents issus de bassins d'agréments, et notamment des eaux de rejet provenant des piscines installées chez des particuliers.

La présente invention concerne plus particulièrement un dispositif de traitement des effluents d'un bassin d'agrément, tels qu'une piscine ou un jeu d'eau, lesdits effluents contenant de l'eau ainsi qu'une substance désinfectante destinée à limiter la prolifération d'organismes pathogènes et/ou inesthétiques dans ladite eau lors du fonctionnement normal dudit bassin d'agrément.

La présente invention concerne également un produit destiné au traitement de l'eau d'un bassin d'agrément, tel qu'une piscine ou un jeu d'eau, ladite eau contenant une substance désinfectante destinée à limiter la prolifération d'organismes pathogènes et/ou inesthétiques dans ladite eau lors du fonctionnement normal dudit bassin d'agrément.

La présente invention concerne également un bassin d'agrément, tel qu'une piscine ou un jeu d'eau.

La présente invention concerne par ailleurs une nouvelle utilisation d'un produit de traitement de l'eau.

La présente invention concerne également un procédé de fabrication du produit de traitement de l'eau susmentionné.

La présente invention concerne enfin un procédé de traitement des effluents d'un bassin d'agrément, tel qu'une piscine ou un jeu d'eau, lesdits effluents contenant de l'eau ainsi qu'une substance désinfectante destinée à limiter la prolifération d'organismes pathogènes et/ou inesthétiques dans ladite eau lors du fonctionnement normal dudit bassin d'agrément.

Le marché de la piscine particulière a connu un essor majeur au cours des dernières années.

A titre d'exemple, on compte aujourd'hui en France plus de 1,1 million de bassins privés dont environ 762 000 piscines enterrées et 392 000 hors sol.

Or, pour garantir tant la qualité des eaux de baignade, notamment sur un plan sanitaire, que la longévité des équipements, les bassins d'agréments nécessitent un entretien régulier qui génère en général une forte consommation d'eau.

En particulier, lesdits bassins sont généralement pourvus de filtres, de type filtres à sable, destinés à capturer et dégrader les particules en suspension dans l'eau de baignade. Pour éviter le colmatage de tels filtres, il est connu de réaliser leur nettoyage périodique en inversant le sens d'écoulement de l'eau au sein de la masse filtrante de manière à expulser vers l'égout les particules capturées par celle-ci.

Une telle opération de nettoyage par rétro-circulation représente fréquemment le déversement de plusieurs mètres-cubes d'eau dans les égouts.

Une autre opération d'entretien usuelle consiste à vidanger le bassin pour permettre son nettoyage, voire son déplacement et/ou son démontage. Une telle opération est pratiquée par de nombreux propriétaires de piscine hors sol en vue du stockage hivernal de leur bassin à l'abri des conditions atmosphériques trop rigoureuses.

Bien entendu, quelle que soit l'opération effectuée, la quantité d'eau évacuée doit être compensée par un apport d'eau neuve de volume sensiblement équivalent pour restituer au bassin sa fonction initiale.

De telles opérations de purge et de remplissage entraînent un certain gaspillage de l'eau, dommageable sur le plan environnemental dans la mesure où il contribue à ponctionner une ressource en eau qui tend à se raréfier, notamment pendant les saisons chaudes.

En outre, le rejet à l'égout d'importantes quantités d'eau, généralement de l'ordre de quelques mètres-cubes à plusieurs dizaines de mètres-cubes, contribue à augmenter le volume global des eaux usées qui doit être pris en charge par le réseau de collecte et traité par les centrales d'épuration.

Il résulte par conséquent des opérations d'entretien courantes des bassins d'agrément connus une double charge financière qui pèse tant sur le propriétaire dudit bassin que sur la collectivité.

De surcroît, l'eau présente dans les bassins d'agréments tels que les piscines est généralement traitée à l'aide de produits chimiques désinfectants destinés à éliminer les micro-organismes indésirables, notamment pathogènes (bactéries, virus, champignons).

Entre autres substances désinfectantes, on peut citer notamment le chlore, qui est généralement utilisé sous forme d'ion hypochlorite CIO⁻, dit également « *chlore libre* ».

Or, lorsque de tels produits désinfectants sont déversés dans les égouts en même temps que l'eau qui les contient, le chlore est susceptible de réagir avec des substances organiques présentes dans les égouts pour former des composés volatiles et irritants de type chloramines. En outre, la présence de chlore est de nature à perturber le fonctionnement des centrales d'épuration qui appliquent un processus de traitement des eaux usées faisant intervenir des micro-organismes vivants tels que des bactéries.

C'est pourquoi les fabricants d'articles de piscines commercialisent des substances neutralisantes destinées à réduire la concentration en ions hypochlorite dans l'eau des bassins. De tels réactifs, généralement à base de thiosulfate, se présentent usuellement sous forme pulvérulente et sont destinés à être déversés dans le bassin pour réagir par oxydoréduction avec le chlore libre.

Toutefois, ce type de traitement présente de multiples inconvénients.

D'une part, le dosage de la quantité de réactif est souvent imprécis, l'utilisateur devant procéder au jugé par itérations successives, jusqu'à ce qu'il constate une absence de réaction témoignant que la substance neutralisante a été déversée en excès par rapport au chlore contenu dans le bassin.

D'autre part, un tel traitement s'applique simultanément à toute l'eau contenue dans le bassin ce qui le rend particulièrement inadapté aux opérations de vidange partielle et conduit fréquemment le propriétaire à y renoncer. En effet, une telle situation implique de déverser une importante quantité de réactif à même le bassin pour neutraliser tout le chlore présent, puis de réaliser l'opération d'entretien et la vidange partielle d'une partie de cette eau (soit généralement environ 5 à 10 % du volume total), puis de compenser la perte d'eau par un apport d'eau neuve, et enfin de traiter le volume reconstitué en y ajoutant une importante quantité de substance désinfectante afin de restaurer le potentiel désinfectant de l'eau du bassin.

On conçoit aisément qu'une telle opération est particulièrement fastidieuse et d'un coût prohibitif.

Ainsi, le bilan des opérations d'entretien des bassins d'agrément connu demeure globalement défavorable tant sur le plan environnemental que sur le plan économique.

Les objets assignés à la présente invention visent par conséquent à remédier aux inconvénients susmentionnés et à proposer un nouveau dispositif de traitement qui permette une gestion économique, intuitive et écologique de l'eau d'un bassin d'agrément.

Un autre objet assigné à l'invention est de proposer un dispositif de traitement qui soit particulièrement simple à mettre en oeuvre.

Un autre objet assigné à l'invention vise à proposer un nouveau dispositif de traitement dont le fonctionnement soit fiable, efficace et aisément contrôlable.

Un autre objet assigné à la présente invention vise à proposer un nouveau dispositif de traitement qui soit de conception simple, compact et bon marché.

Les objets assignés à la présente invention visent également à proposer un nouveau produit destiné au traitement de l'eau d'un bassin d'agrément qui présente une bonne efficacité tout en étant d'emploi particulièrement simple.

Un autre objet assigné à l'invention vise à proposer un nouveau bassin d'agrément qui permette une meilleure gestion de l'eau tant sur un plan environnemental que sur un plan économique.

Un autre objet de l'invention vise à proposer une nouvelle utilisation d'un produit de traitement de l'eau d'un bassin d'agrément qui soit particulièrement simple et efficace.

Un autre objet de l'invention vise à proposer un nouveau procédé de fabrication d'un produit de traitement de l'eau d'un bassin d'agrément qui permette de conditionner facilement ledit produit sous une forme simplifiant sa mise en oeuvre.

Un autre objet assigné à l'invention vise à proposer un nouveau procédé de traitement applicable à un bassin d'agrément qui optimise l'impact économique et écologique dudit bassin sur son environnement.

Un autre objet de l'invention vise à proposer un nouveau procédé de traitement applicable à un bassin d'agrément qui soit particulièrement efficace, rapide et économique.

Enfin, un autre objet assigné à l'invention vise à proposer un nouveau procédé de traitement applicable à un bassin d'agrément qui permette de réaliser de substantielles économies d'eau.

Les objets assignés à l'invention sont atteints à l'aide d'un dispositif de traitement des effluents d'un bassin d'agrément, tel qu'une piscine ou un jeu d'eau, lesdits effluents contenant de l'eau ainsi qu'une substance désinfectante destinée à limiter la prolifération d'organismes pathogènes et/ou inesthétiques dans ladite eau lors du fonctionnement normal dudit bassin d'agrément, ledit dispositif comportant une unité de traitement conçue pour réduire la teneur en substance désinfectante des effluents avant le rejet de ces derniers hors dudit bassin d'agrément, ladite unité de traitement comportant une chambre de réaction conçue pour contenir une substance neutralisante destinée à réagir chimiquement, par exemple par oxydoréduction, avec la substance désinfectante, ledit dispositif étant caractérisé en ce que ladite substance neutralisante est incorporée dans ou sur un substrat solide au contact duquel les effluents sont destinés à circuler, en ce que ledit substrat solide est formé par un ou plusieurs galets se présentant sous un ou plusieurs formats normalisés, et en ce que la chambre de réaction dispose d'un support qui présente un ou plusieurs logements individuels conçus chacun pour accueillir un ou plusieurs desdits galets et dont la capacité d'accueil définit, pour l'un et/ou l'autre desdits formats de galets normalisés, un dosage prédéterminé de la substance neutralisante.

Les objets assignés à l'invention sont également atteints à l'aide d'un produit destiné au traitement de l'eau d'un bassin d'agrément, tel qu'une piscine ou un jeu d'eau, ladite eau contenant une substance désinfectante destinée à limiter la prolifération d'organismes pathogènes et/ou inesthétiques dans ladite eau lors du fonctionnement normal dudit bassin d'agrément, ledit produit étant caractérisé en ce qu'il comprend un mélange d'au moins une substance neutralisante choisie pour réagir chimiquement avec ladite substance désinfectante afin de réduire la teneur en substance désinfectante de l'eau, et d'au moins un liant choisi parmi le groupe suivant : bromure de potassium, kaolin, acide borique, stéarate de sodium, pour permettre le compactage dudit mélange en vue de la présentation dudit produit sous forme d'agrégats.

Les objets assignés à l'invention sont également atteints à l'aide d'un bassin d'agrément, tel qu'une piscine ou un jeu d'eau, caractérisé en ce qu'il comporte un dispositif de traitement de ses effluents conformes à la présente invention.

Les objets assignés à l'invention sont également atteints à l'aide de l'utilisation d'un produit de traitement de l'eau conforme à l'invention au sein d'un dispositif de traitement des effluents d'un bassin d'agrément selon la présente invention afin de faire réagir la substance neutralisante contenue dans ledit produit avec la substance désinfectante contenue dans les effluents dudit bassin d'agrément pour réduire la teneur en substance désinfectante desdits effluents.

Les objets assignés à l'invention sont également atteints à l'aide d'un procédé de fabrication d'un produit de traitement de l'eau d'un bassin d'agrément, tel qu'une piscine ou un jeu d'eau, ladite eau contenant une substance désinfectante destinée à limiter la prolifération d'organismes pathogènes et/ou inesthétiques dans ladite eau lors du fonctionnement normal dudit bassin d'agrément, ledit procédé de fabrication étant caractérisé en ce qu'il comprend une étape (E1) de préparation au cours de laquelle on mélange d'une part une substance neutralisante choisie pour réagir chimiquement avec ladite substance désinfectante afin de réduire la teneur en ladite substance désinfectante de l'eau, avec d'autre part un liant choisi parmi le groupe suivant : bromure de potassium, kaolin, acide borique, stéarate de sodium, puis une étape (E2) de compactage au cours de laquelle on comprime le mélange obtenu lors de l'étape de préparation afin de former un agrégat compact.

Les objets assignés à l'invention sont enfin atteints à l'aide d'un procédé de traitement des effluents d'un bassin d'agrément, tel qu'une piscine ou un jeu d'eau, lesdits effluents contenant de l'eau ainsi qu'une substance désinfectante destinée à limiter la prolifération d'organismes pathogènes et/ou inesthétiques dans ladite eau lors du fonctionnement normal dudit bassin d'agrément, caractérisé en ce qu'il comporte une étape (a) de traitement au cours de laquelle on réduit la teneur en substance désinfectante des effluents en faisant circuler lesdits effluents au contact d'une substance neutralisante incorporée dans un substrat solide se présentant sous la forme d'un ou plusieurs galets de format(s) normalisé(s) disposés sur un support pourvu d'un ou plusieurs logements individuels conçus chacun pour accueillir un ou plusieurs desdits galets, puis une étape (b) de rejet au cours de laquelle on rejette les effluents traités dans hors dudit bassin, et en ce qu'il comprend une étape (c) de détermination de la charge en substrat au cours de laquelle l'utilisateur sélectionne, parmi une pluralité de combinaisons pré-étalonnées, une combinaison d'un ou plusieurs logements individuels et d'un ou plusieurs formats de galets associés afin de définir le dosage en substance neutralisante.

D'autres objets, caractéristiques et avantages de l'invention apparaîtront plus en détails à la lecture de la description qui suit, ainsi qu'à l'aide des dessins annexés, fournis à titre purement illustratifs et non limitatifs, parmi lesquels :
- La figure 1 illustre, selon une vue éclatée en perspective, un dispositif de traitement des effluents d'un bassin d'agrément conforme à l'invention.
- La figure 2 représente, selon une vue schématique, une forme de réalisation de bassin d'agrément comportant un dispositif de traitement de ses effluents conforme à l'invention.
- La figure 3 illustre, selon une vue en perspective, une variante de réalisation d'un produit destiné au traitement de l'eau d'un bassin d'agrément conforme à l'invention.
- La figure 4 illustre, selon une vue schématique en coupe longitudinale, le principe de fonctionnement d'un dispositif de traitement des effluents d'un bassin d'agrément conforme à l'invention.

Le dispositif de traitement 1 conforme à l'invention, ci-après « *dispositif* », est destiné au traitement des effluents d'un bassin d'agrément 2.

Par « *bassin d'agrément* », on entend un ouvrage hydraulique intérieur ou extérieur, contenant un liquide de remplissage stagnant ou mouvant et dédié à la baignade, à une activité ludique ou encore au simple ornement. Au sens de l'invention, le bassin d'agrément 2 peut notamment constituer une piscine, et plus précisément une piscine particulière destinée à un usage privé, une pataugeoire, une zone d'aspersion destinée au massage ou au rafraîchissement corporel, un jeu d'eau décoratif comprenant par exemple une vasque, une fontaine, une cascade artificielle etc.

Par « *effluents* », on désigne une quantité quelconque de liquide de remplissage du bassin d'agrément 2 qui est extraite dudit bassin pour être rejetée hors dudit bassin 2.

En d'autres termes, on considère « *physiquement* » le bassin 2 comme un système fermé contenant une certaine quantité d'un liquide de remplissage, les effluents étant formés par la quantité de liquide de remplissage qui est tirée dudit système et transférée vers l'extérieur dudit système, c'est-à-dire dans l'environnement de ce dernier.

Ledit système fermé peut comprendre un bassin proprement dit, par exemple une zone de baignade, et un ou plusieurs circuits de purification, tels que des filtres, qui prélève(nt) le liquide de remplissage dans le bassin et le traite(nt) avant de le rejeter dans ledit bassin de manière à garantir une qualité sensiblement constante d'un point de vue chimique et/ou sanitaire dudit liquide de remplissage. Ainsi, au sens de l'invention les effluents ne sont pas destinés à revenir au bassin dont ils sont issus.

De façon préférentielle, le liquide de remplissage du bassin 2 est formé principalement par de l'eau.

Afin d'empêcher l'apparition, ou tout du moins de limiter la prolifération d'organismes indésirables tels que bactéries, virus, champignons et/ou algues susceptibles de rendre l'eau impropre à la baignade ou à l'ornementation, avec par exemple pour conséquence une coloration ou une odeur désagréable, ladite eau contient une substance désinfectante (qui peut résulter d'un mélange de plusieurs composés chimiques).

Ladite substance désinfectante peut notamment contenir du chlore dit « *libre* » présent en solution sous forme d'ions hypochlorites ClO⁻.

Les propriétés désinfectantes, et plus précisément virucides, bactéricides, fongicides et anti-algue du chlore libre sont en effet bien connues de l'homme du métier. Usuellement, la concentration en ions hypochlorites dans l'eau du bassin 2 est sensiblement voisine de 2 mg/L et peut être portée jusqu'à 6 mg/L en cas de traitement « *de choc* » destiné à restaurer rapidement la qualité d'une eau très dégradée (par exemple touchée par le phénomène « *d'eau verte* », c'est-à-dire d'envahissement par des algues).

Par conséquent, les effluents tirés du bassin d'agrément 2 contiennent eux aussi de l'eau ainsi que la substance désinfectante destinée à limiter la prolifération d'organismes pathogènes et/ou inesthétiques dans ladite eau lors du fonctionnement normal du bassin d'agrément 2.

Selon une caractéristique importante de l'invention, le dispositif 1 comporte une unité de traitement 3 conçue pour réduire la teneur en substance désinfectante des effluents avant le rejet de ces derniers hors dudit bassin d'agrément 2. Par convention, on désigne par « *effluents chargés* » les effluents issus du bassin 2 entrant dans l'unité de traitement 3 et par « *effluents traités* » les effluents ressortant de ladite unité de traitement 3.

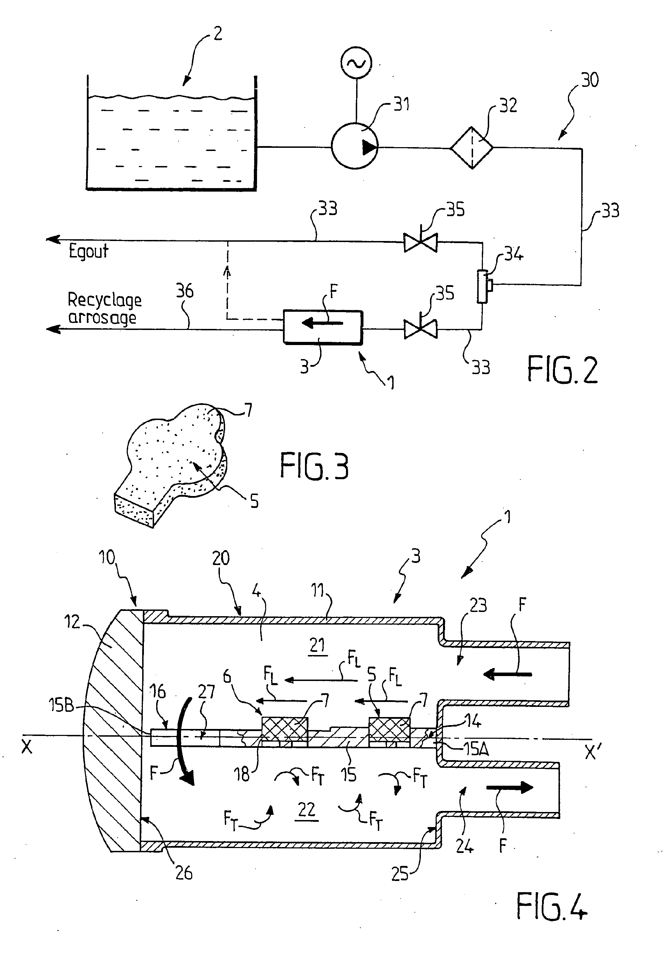

Bien entendu, tel que cela est illustré sur la figure 2, les effluents traités peuvent être rejetés à l'égout. Toutefois, il est particulièrement avantageux pour le particulier de recycler directement lesdits effluents traités en les employant pour un usage secondaire tel que l'arrosage des espaces verts ou des plantes potagères.

Ainsi, le dispositif 1 conforme à l'invention limite avantageusement l'impact environnemental et économique des opérations d'entretien du bassin 2, dans la mesure où il permet non seulement de réduire, voire de supprimer, la toxicité des effluents dudit bassin, mais encore de recycler et de valoriser les effluents dudit bassin après leur traitement, en permettant par exemple leur utilisation pour l'arrosage des espaces verts.

Le dispositif conforme à l'invention contribue ainsi d'une part à prévenir le gaspillage des ressources en eau, en minorant les besoins cumulés du particulier grâce au recyclage de la même eau d'une application (baignade) à l'autre (arrosage), et d'autre part à limiter la production d'eaux usées assimilables à des déchets et devant faire l'objet d'un traitement en centrale d'épuration coûteux pour la collectivité.

II est notamment envisageable que l'unité de traitement 3 conforme à l'invention comporte un système de brassage, d'exposition aux UV et/ou de décantation destiné à expulser le chlore libre par des processus physico-chimiques sensiblement naturels.

Toutefois, l'unité de traitement 3 comporte de préférence une chambre de réaction 4 contenant une substance neutralisante 5 qui est destinée à réagir chimiquement, par exemple par oxydoréduction, avec la substance désinfectante.

Au sens de l'invention, la « *neutralisation* » de la substance désinfectante revient à modifier le comportement de cette dernière soit en l'inhibant, soit en modifiant sa structure ou sa composition, de manière à la rendre inactive, c'est-à-dire sensiblement neutre ou inerte sur le plan chimique, et à tout le moins non toxique vis-à-vis de l'environnement dans lequel les effluents sont rejetés.

La neutralisation peut être complète ou partielle, dès lors que l'éventuelle concentration résiduelle de la substance désinfectante dans les effluents est compatible chimiquement et réglementairement avec l'usage auquel lesdits effluents sont destinés. En d'autres termes, la neutralisation peut consister à appauvrir les effluents en substance désinfectante active. Bien entendu, l'un des objets de l'invention étant d'économiser l'eau, la neutralisation ne doit pas consister en une simple dilution des effluents mais plutôt en une réduction de la concentration en substance désinfectante dans un volume d'effluents constant.

De préférence, la substance neutralisante 5 comprend un sel de thiosulfate (S₂O₃²⁻) ou un sel d'hyposulfite (SO₂²⁻).

En effet, de tels réactifs sont couramment employés pour transformer les ions hypochlorites ClO⁻ en ions chlorures Cl⁻, qui ne présentent pas le pouvoir oxydant desdits ions hypochlorites et peuvent par conséquent être déversés dans la nature sans conséquence préjudiciable pour l'environnement.

L'équation bilan (1) de la neutralisation, en l'occurrence une réduction, s'écrit alors :

2 H⁺ + ClO⁻ + 2 S₂O₃²⁻ => Cl⁻ + H₂O + S₄O₆²⁻ (I)

Bien entendu, la substance neutralisante 5 est choisie en fonction du ou des substances désinfectantes qui doivent être neutralisées avant rejet des effluents dans l'environnement du bassin 2. Il est par conséquent envisageable d'employer une autre substance neutralisante ou un autre mélange de substances neutralisantes que celles susmentionnées, pourvu que les produits de la réaction de neutralisation soient compatibles avec l'usage auquel ils sont destinés, et notamment respectueux des normes sanitaires et environnementales régissant les rejets d'effluents dans la nature et/ou les égouts.

De préférence, la substance neutralisante 5 est incorporée dans ou sur un substrat solide 6 qui est maintenu dans la chambre de réaction 4 afin de permettre aux effluents de circuler au contact dudit substrat 6.

Selon une caractéristique importante de l'invention, le substrat 6 se présente sous la forme d'un ou plusieurs éléments, dit « *galets* » 7, se présentant sous un ou plusieurs format(s) normalisé(s).

Au sens de l'invention, les caractéristiques morphologiques et dimensionnelles des galets 7 d'un même « *format normalisé* » sont prédéterminées et sensiblement égales d'un galet à l'autre, ou à tout le moins sensiblement comprises dans une plage de valeurs prédéfinies sensiblement invariante.

Ainsi, les galets peuvent former des blocs de forme géométrique contrôlée et sensiblement identiques deux à deux.

Selon une autre variante de réalisation, les galets peuvent également former les entités élémentaires d'un granulat de granulométrie normalisée.

De préférence, le volume desdits galets est sensiblement compris entre 40 cm³ et 160 cm³.

Au sens de l'invention, les galets 7 se distinguent des produits pulvérulents de l'art antérieur par des dimensions, un volume et une masse plus importants que ceux des grains de poudre considérés individuellement. Tel que cela sera décrit plus en détails ci-après, lesdits galets 7 peuvent avantageusement être formés par des agrégats résultant du compactage d'un mélange contenant la substance neutralisante sous forme pulvérulente.

Un tel conditionnement du substrat facilite grandement sa manipulation et sa mise en place au sein du dispositif 1 et permet également un dosage plus précis de la quantité de substance neutralisante nécessaire et suffisante à la neutralisation des ions hypochlorites contenus dans les effluents.

Le conditionnement dudit substrat n'est toutefois pas limité à une forme particulière de réalisation et pourra par exemple se présenter sous la forme d'un lit d'épaisseur choisie ou encore sous la forme de particules solides libres de se débattre au gré de l'écoulement des effluents dans un espace clos limité par exemple par des grilles.

De façon préférentielle, l'opération de réduction de la teneur en substance désinfectante des effluents vise à garantir que la concentration en substance désinfectante, et plus particulièrement en ions hypochlorites, dans lesdits effluents soit compatible avec le rejet desdits effluents dans l'environnement. Plus précisément, la réaction de neutralisation (I) visera à ne pas laisser plus de 0,3 mg/L de chlore résiduel dans les effluents traités, ce qui correspond à la norme en matière de consommation humaine.

De façon préférentielle, les galets 7 sont solubles dans l'eau. Ainsi, la substance neutralisante 5 peut avantageusement être libérée progressivement, au fur et à mesure que les effluents chargés circulent au contact desdits galets 7 et que ces derniers se délitent.

En fonction du débit des effluents à traiter, la chambre de réaction 4 ainsi que la surface d'échange et le volume du substrat 6, et par conséquent des galets 7, pourront aisément être adaptés par l'homme du métier, notamment à l'aide de campagnes d'essais.

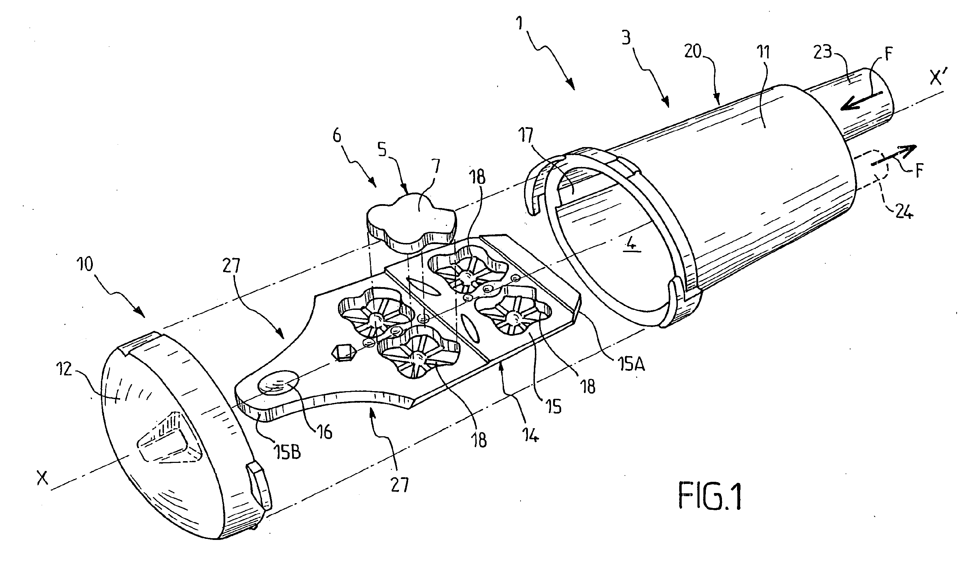

Selon une variante de réalisation préférentielle illustrée notamment sur les figures 1 et 4, la chambre de réaction 4 dispose d'un moyen d'accès 10 permettant l'ajout, le renouvellement ou l'extraction du substrat 6.

Plus particulièrement, tel que cela est représenté sur la figure 1, la chambre de réaction peut être délimitée par une coque 11, sur laquelle peut être rapporté de façon étanche un bouchon 12 amovible dont le retrait permet à l'utilisateur d'accéder à ladite chambre de réaction 4 elle-même située à l'intérieur de ladite coque 11. De préférence, le bouchon 12 sera fixé à la coque 11 au moyen d'un système de verrouillage réversible dont la mise en oeuvre est rapide et simple, tel qu'un filetage quart de tour ou des mors élastiques de type « *sauterelles* ».

De façon particulièrement préférentielle, la coque 11 présente une forme sensiblement cylindrique, qui s'étend selon un axe générateur (XX'). Bien que la géométrie de la section de base de ladite coque cylindrique puisse être quelconque, celle-ci sera de préférence sensiblement circulaire ou elliptique, une telle forme de réalisation permettant une fabrication simple par moulage et facilitant également le nettoyage.

Selon une caractéristique importante de l'invention, la chambre de réaction 4 dispose d'un support 14 qui présente un ou plusieurs logements individuels 18. Lesdits logements individuels sont conçus chacun pour accueillir un ou plusieurs galets 7 de format(s) normalisé(s), et leur capacité d'accueil respective définit, pour l'un et/ou l'autre desdits formats normalisés, un dosage prédéterminé de la substance neutralisante 5.

En d'autres termes, les galets 7 se présentent sous un ou, éventuellement, plusieurs formats normalisés, et la chambre de réaction 4 dispose d'un support 14 qui présente un ou plusieurs logements individuels 18, c'est-à-dire distincts et indépendants les uns des autres, de capacité normalisée, c'est-à-dire prédéfinie au sein d'une gamme sensiblement invariante fixée par construction, et plus particulièrement de forme(s) conjuguée(s) à celle(s) dudit ou desdits formats normalisés.

Ainsi, l'utilisateur est en mesure de choisir, de manière immédiate et intuitive, la configuration de dosage de la substance neutralisante 5 qui correspond à des conditions prédéterminées d'utilisation du dispositif 1, et plus globalement du bassin 2, parmi une pluralité de configurations de dosage possibles.

Ces conditions d'utilisation peuvent dépendre de plusieurs paramètres, tels que le volume dudit bassin, la fréquence des entretiens, le volume et le débit des effluents, les conditions climatiques...

A titre d'exemple, il est envisageable de prévoir une configuration de dosage « *grand volume - temps chaud* », une autre « *petit volume - temps frais* », une autre encore « *grand débit* », etc.

La « *configuration de dosage* » définit notamment la quantité brute, par exemple en poids, de substance neutralisante 5 embarquée par le logement 18 considéré, laquelle dépend du format de galet retenu ainsi que de la quantité de galets pouvant être contenus ensemble dans ledit logement.

Ladite configuration de dosage définit également le mode d'administration de ladite substance neutralisante 5, c'est-à-dire la configuration dans laquelle le substrat 6 est exposé au contact des effluents (par exemple au moyen d'un gros galet unique ou d'une pluralité de galets en vrac, dans un ou plusieurs logements 18), cette configuration influant notamment sur la surface totale de contact du substrat avec les effluents ainsi que sur la vitesse de dissolution des galets 7.

Au sens de l'invention, le fabricant définit par avance, par exemple par des campagnes d'essais, différents modes d'utilisation indicatifs « *typiques* » du bassin 2, en fonction de l'un et/ou l'autre des paramètres rappelés ci-dessus, et peut ainsi intégrer au dispositif 1 une gamme standard de réglages du dosage qui est pré-étalonnée en conséquence.

L'opération de réglage du dosage s'effectue alors sur site, lorsque l'utilisateur sélectionne lui-même la configuration de dosage qui lui paraît la plus appropriée aux conditions effectives dans lesquelles il utilise son bassin 2.

De préférence, les galets 7 présentent une taille suffisante pour pouvoir être disposés un par un sur le support 14, chacun au niveau d'un logement individuel 18.

Ainsi, chaque logement individuel 18 peut avantageusement être dimensionné pour accueillir au plus un unique galet de format correspondant. De surcroît, la forme du logement 18 peut comporter un contour spécifique faisant office de détrompeur, de telle sorte qu'un seul format normalisé de galet 7 soit compatible avec ledit logement 18.

Toutefois, il n'est pas exclu d'utiliser un substrat 6 se présentant sous forme de galets 7 disposés en vrac, et par exemple contenus dans un panier percé, sans sortir du cadre de la présente invention.

Ainsi, un même logement individuel 18 peut être destiné à accueillir une pluralité de galets 7, de préférence tous du même format normalisé, selon une quantité prédéterminée qui correspond à une « *dose unitaire* » définie empiriquement par le fabricant en fonction de conditions d'utilisations particulières du dispositif 1. Dans un tel cas, le dosage s'effectue de préférence par remplissage à ras-bord (ou à tout le moins jusqu'à un repère fixe bien visible) du logement 18 concerné avec le granulat composé des galets 7.

Avantageusement, la sélection d'un couple {logement(s) ; galet(s)} parmi une pluralité de combinaisons normalisées possibles permet à l'utilisateur de déterminer, de manière très intuitive et précise, selon les recommandations du fabricant, le type et/ou la quantité de galets effectivement placés au contact des effluents dans la chambre de réaction 4 pour obtenir le dosage approprié aux conditions d'utilisation de son dispositif 1, et plus globalement de son bassin 2.

En particulier, lorsque le support 14 comporte plusieurs logements individuels 18 normalisés, notamment au moins deux voire au moins trois logements 18 identiques les uns aux autres, ou encore plusieurs logements capables d'accueillir chacun plusieurs galets, il est avantageusement possible à l'utilisateur de choisir le nombre de logements occupés (ou remplis) simultanément, et ainsi la quantité (en nombre, en volume ou en masse) de galets immergés au même moment au contact des effluents à neutraliser.

En outre, le recours à un format normalisé de galets 7, ou à une gamme de formats normalisés, présente de nombreux avantages. Tout d'abord, il permet de rationaliser la production des galets et par conséquent de réaliser des économies d'échelle. Ensuite, il est alors possible d'indiquer à l'utilisateur, pour chaque format, les conditions d'utilisation dans lesquelles le galet peut être mis en oeuvre. A titre d'exemple, il est envisageable de différencier les galets par leur taille, leur forme, leur aspect (lisse, rugueux, ondulé...) voire leur couleur et de réaliser une sorte de codification qui renseigne visuellement l'utilisateur sur le format de galets qu'il doit adopter pour tirer le meilleur parti du dispositif 1 en fonction des conditions d'utilisation personnelle de son bassin d'agrément (volume dudit bassin, fréquence des entretiens, volume et débit des effluents...). De surcroît, il est possible d'associer lesdits formats normalisés à des signes distinctifs à vocation publicitaire qui contribuent à associer l'image du galet à la notoriété du fabricant. Enfin, la forme particulière des galets peut contribuer d'une part à faciliter sa mise en place et son maintien dans la chambre de réaction 4 au sein des logements individuels 18 et d'autre part fournir le cas échéant un moyen de détrompage garantissant que les galets sont insérés convenablement dans lesdits logements individuels 18 pour assurer leur fonction optimale de substrat de neutralisation.

Bien entendu, le dispositif peut également être fourni avec une pluralité de supports 14 interchangeables présentant chacun des configurations de logements individuels 18 différentes, adaptées aux différents types de conditions d'utilisation usuellement rencontrées par l'utilisateur. Selon un tel mode de réalisation, la simple sélection du support 14 approprié et son garnissage complet en galets 7 peut assurer à l'utilisateur un fonctionnement du dispositif 1 sensiblement optimisé vis-à-vis de son besoin particulier.

Dans l'exemple particulier illustré sur la figure 3, le galet 7 se présente sous la forme d'une feuille de trèfle sensiblement inscrite dans un parallélépipède de largeur et de longueur sensiblement comprise entre 60 mm et 80 mm et de hauteur comprise entre 15 mm et 35 mm.

Par ailleurs, bien qu'il ne soit pas limité à une forme de réalisation particulière, le support 14 se présente de préférence sensiblement sous la forme d'une plaque 15 dans laquelle sont marquées ou découpées des empreintes formant les logements individuels 18.

De préférence, ladite plaque 15 comporte des moyens de préhension, tel qu'une poignée 16, qui facilitent sa manipulation lors des opérations d'extraction et de repositionnement au sein de la chambre 4.

De préférence, la coque 11 est en outre pourvue d'un système de glissière comprenant des rails 17, par exemple creusés dans la paroi interne de ladite coque, lesdites glissières étant destinées à accueillir et/ou soutenir les bords de la plaque 15, le support 14 formant alors une sorte de tiroir extractible au sein duquel reposent le ou les galets.

Une telle disposition permet avantageusement de garantir un maintien mécanique satisfaisant du support 14, et par conséquent des galets 7, par rapport à la coque 11 lors de l'écoulement des effluents, et d'autre part de simplifier l'extraction du support 14 en vue de son (re)garnissage en substrat 6 puis sa réinsertion au sein de la chambre de réaction 4. Les rails 17 et les rebords de la plaque 15 peuvent avantageusement présenter des sections biseautées de profils conjugués et faire office de détrompeurs afin de garantir l'insertion dans le bon sens du support 14 par rapport à la chambre de réaction 4 et au sens d'écoulement des effluents.

Selon une variante de réalisation préférentielle, l'unité de traitement 3 comporte au moins une fenêtre transparente 20 agencée pour permettre un contrôle visuel de l'état du substrat 6 disposé au sein de la chambre de réaction 4.

Plus particulièrement, la paroi latérale de la coque 11 peut être à cet effet entièrement transparente.

Par ailleurs, il est envisageable de prévoir sur ladite coque 11 des moyens de fixation conçus pour recevoir un manchon transparent coloré ou présentant des motifs décoratifs, afin de permettre à l'utilisateur de recouvrir ladite coque 11 et ainsi de personnaliser l'aspect visuel du dispositif 1.

Avantageusement, la présence de la fenêtre transparente 20 permet à l'utilisateur de surveiller la dissolution progressive des galets 7 afin de procéder au remplacement de ceux-ci dès que le substrat 6 est épuisé, ou encore de détecter une éventuelle obstruction de la chambre de réaction 4 et/ou une pollution de son contenu par des corps étrangers solides contenus dans les effluents afin de décider d'une intervention de nettoyage.

De façon particulièrement préférentielle, tel que cela est illustré sur les figures 1 et 4, la chambre de réaction 4 est étagée, par rapport au sens global d'écoulement (représenté par les flèches F) des effluents au sein de ladite chambre de réaction, en une zone amont 21 et une zone aval 22, les effluents circulant donc de la zone amont 21 vers la zone aval 22 lorsqu'ils traversent la chambre de réaction 4.

Au sens de l'invention, la mise en présence des effluents avec la substance neutralisante 5, c'est-à-dire plus précisément la circulation desdits effluents au contact du substrat 6, est réalisée sensiblement au niveau de la zone amont 21. Selon l'invention, la zone amont 21 est alors agencée pour que l'écoulement des effluents soit sensiblement laminaire lorsque ces derniers rencontrent la substance neutralisante 5, tel que cela est illustré par les flèches F_{L} sur la figure 4, tandis que la zone aval 22 est agencée pour induire des turbulences (représentées par les flèches F_{T}) dans l'écoulement de manière à entraîner le brassage des effluents après que ces derniers ont été mis en présence de la substance neutralisante 5.

La coque 11 est en outre pourvue d'au moins un orifice d'admission 23 des effluents et d'au moins un orifice 24 de rejet desdits effluents, agencés de telle sorte que les effluents arrivant par l'orifice d'admission 23 débouchent dans la chambre de réaction 4 au niveau de la zone amont 21, s'écoulent selon un flux laminaire F_{L} au contact des galets 7 puis subissent des turbulences F_{T} avant d'être expulsés par l'orifice de rejet 24.

De façon particulièrement avantageuse, un tel agencement de la chambre de réaction 4 permet d'une part de limiter la vitesse d'usure, et plus précisément de dissolution, des galets 7, c'est-à-dire la consommation de substances neutralisantes, du fait que l'écoulement laminaire F_{L} n'engendre pas une forte érosion mécanique desdits galets 7, et d'autre part d'assurer une répartition sensiblement homogène et par conséquent une action optimale de la substance neutralisante 5 passée en solution dans les effluents grâce au brassage induit par les turbulences F_{T}.

Ainsi, le dispositif 1 conforme à l'invention permet d'optimiser l'utilisation de la substance neutralisante en contrôlant sa diffusion au sein des effluents et en homogénéisant son action de manière à traiter l'ensemble du volume des effluents sans nécessiter l'introduction en excès de substances neutralisantes.

Bien entendu, cet agencement permettant d'obtenir un écoulement sensiblement laminaire au contact du substrat puis un écoulement perturbé, sensiblement turbulent, destiné à brasser les effluents après exposition au substrat peut constituer une invention en tant que telle, indépendamment de la nature, de la forme et de la disposition du substrat 6 ou du support 14.

De préférence, tel que cela est illustré sur la figure 4, le substrat 6 est disposé sur le support 14 qui forme dans la chambre de réaction 4 une chicane marquant la transition entre la zone amont 21 et la zone aval 22.

Tel que cela est illustré sur la figure 1, la coque 11 s'étend de préférence entre une première paroi de fond 25, au niveau de laquelle débouche l'orifice d'admission 23, et une seconde paroi de fond 26 pleine, formée de préférence par la base du bouchon 12.

En outre, la plaque 15 formant le support 14 est de préférence placée au contact de ladite première paroi de fond 25 et orientée de telle manière que l'orifice d'admission 23 et l'orifice de rejet 24 se trouvent situés de part et d'autre de la cloison ainsi formée, respectivement en vis-à-vis de la zone amont 21 et de la zone aval 22 ainsi définies.

Tel que cela est illustré sur la figure 2, la plaque 15 s'étend de préférence sensiblement parallèlement à un plan sagittal de ladite coque, et de façon particulièrement préférentielle sensiblement dans le plan sagittal horizontal de ladite coque.

Plus précisément, lesdits orifices débouchant tous les deux au niveau de la première paroi de fond 25, la plaque 15 s'étend sensiblement à l'horizontale depuis une première extrémité 15A accolée, de préférence de façon sensiblement étanche, contre ladite première paroi de fond 25 jusqu'à une seconde extrémité 15B opposée jouxtant le bouchon 12.

Selon cette variante de réalisation préférentielle, un ou plusieurs passages 27 sont ménagés, lorsque la chambre de réaction 4 est fermée par le bouchon 12, entre l'extrémité de la plaque 15 et la seconde paroi de fond 26, de telle manière que les effluents soient contraints de contourner la plaque 15 pour passer de la zone amont 21 à la zone aval 22.

Ainsi, le franchissement de la chicane formée par la plaque 15 au sein de la chambre de réaction 4 engendre au moins en partie les turbulences F_{T} nécessaires au brassage des effluents.

Selon une variante de réalisation particulièrement préférentielle illustrée sur les figures 1 et 4, les passages 27 nécessaires à la circulation des effluents de la zone amont 21 vers la zone aval 22 sont réalisés à l'aide des découpes de la plaque 15 qui délimitent le contour de la poignée 16.

La génération de turbulences peut en outre être réalisée, ou renforcée, à l'aide de profils et/ou de découpes particuliers aménagés sur la plaque 15, voire sur les parois internes de la coque 11.

De façon particulièrement préférentielle, en référence aux figures 1 et 4, la chambre de réaction 4 est destinée à être disposée sensiblement à l'horizontale et l'orifice d'admission 23 se trouve au-dessus de l'orifice de rejet 24, ce dernier se situant au point bas de la chambre de réaction 4 afin de permettre la purge spontanée de ladite chambre sous l'effet de la gravité.

De préférence, l'orifice d'admission 23 est formé par un élément de tubulure compatible avec un raccordement aux divers formats de tubes normalisés utilisés pour la réalisation des piscines. Plus particulièrement, le diamètre de la tubulure d'admission pourra être de 63 mm de sorte que celle-ci puisse s'adapter, éventuellement au moyen de manchons ou d'adaptateurs, aux diamètres normalisés de 32, 50 et 63 mm.

L'orifice de rejet 24 est quant à lui de préférence formé par une tubulure standard de diamètre 50 mm.

Bien entendu, la position des orifices d'admission et de rejet est susceptible de faire l'objet de variations, et il est notamment envisageable que ceux-ci débouchent latéralement par rapport à la coque 11, suivant une direction normale à son axe (XX') d'extension. Toutefois, pour des raisons de compacité et d'efficacité des écoulements, il est préférable des les placer dans le prolongement de la coque, sensiblement selon l'axe (XX'), de sorte que la chambre de réaction 4 forme un coude au niveau de la transition entre zone amont 21 et zone aval 22.

Il est par ailleurs remarquable que la réaction de neutralisation (I) préférée est quasiment instantanée ce qui permet un traitement rapide des effluents, voire un recyclage quasi immédiat à la sortie de l'orifice de rejet.

Toutefois, l'unité de traitement 3 est de référence dimensionnée de telle sorte que le temps de séjour des effluents en son sein soit supérieur ou égal à 2 secondes, de préférence compris entre 5 et 15 secondes, et de façon particulièrement préférentielle sensiblement égal à 10 secondes, à compter de l'entrée en contact desdits effluents avec la substance neutralisante. En effet, il convient de s'assurer que la substance neutralisante 5 a produit des effets sensiblement homogènes dans les effluents, c'est-à-dire a été diffusée par brassage sensiblement dans tout le volume desdits effluents, avant que ces derniers soient déversés dans l'environnement du bassin.

Le temps de séjour préconisé dépend naturellement du débit des effluents et du mode d'administration de la substance neutralisante au sein de la chambre de réaction 4. Toutefois, dans les conditions généralement rencontrées au niveau des bassins particuliers, ledit débit s'échelonnant de 5 à 30 m³/h, une durée de rétention des effluents d'une dizaine de secondes pendant laquelle lesdits effluents sont exposés à la substance neutralisante passée en solution permet d'assurer l'abaissement de la concentration résiduelle en chlore libre sous le seuil acceptable.

A titre indicatif, cette durée correspond sensiblement à l'écoulement des effluents à travers un tuyau d'arrosage d'une dizaine de mètres. Il est ainsi possible de raccorder un tel tuyau en sortie de la chambre 4, au niveau de l'orifice de rejet 24 et d'y injecter les effluents après leur brassage, la réaction de neutralisation se prolongeant dans ledit tuyau.

Il est remarquable que le dispositif 1 conforme à l'invention peut être intégré en tant qu'équipement fixe au sein du circuit de purge 30 d'un bassin 2, notamment d'une piscine particulière. Plus spécifiquement, l'unité de traitement 3 peut se présenter comme une cartouche destinée à être raccordée à un circuit de purge 30 lors de la conception de ce dernier ou en rattrapage sur un circuit existant.

Tel que cela est illustré sur la figure 2, le circuit de purge 30 peut notamment comprendre une pompe 31 destinée à aspirer l'eau contenue dans le bassin puis à la refouler vers l'unité de traitement 3. Il est envisageable de disposer un filtre 32 destiné à empêcher des particules solides de grande dimension de venir obstruer les canalisations d'évacuation 33 et/ou la chambre de réaction 4. Tel que cela est illustré sur la figure 2, un raccord en T 34 et un jeu de vannes monovoie 35 peuvent permettre de sélectionner soit le rejet direct des effluents chargés à l'égout soit le passage desdits effluents par l'unité de traitement 3, les effluents traités issus de ladite unité de traitement 3 pouvant être à leur tour dirigés soit vers le tout-à-l'égout (flèche en pointillés) soit vers un circuit de récupération 36 connecté en aval du dispositif 1 de traitement des effluents en vue du recyclage des effluents traités, par exemple pour l'irrigation.

Selon l'invention, le circuit de récupération 36 peut consister en un circuit d'utilisation directe des effluents traités, tel qu'un tuyau d'arrosage, ou encore comporter un moyen de stockage (non représenté) tel qu'une citerne, destiné à accueillir les effluents traités en vue de leur réutilisation différée.

Un tel agencement permettrait notamment, dans le cas de piscines hors sol de petites dimensions, de récupérer tout ou partie des eaux de vidange du bassin et de stocker celle-ci dans une citerne enterrée pendant l'hiver, à l'abri du gel, puis de recycler les eaux stockées au printemps et à l'été suivant pour l'arrosage des espaces verts, des arbres fruitiers ou des plantes potagères.

Bien entendu, d'autres schémas de connexion hydraulique sont envisageables, notamment en utilisant une vanne trois voies en remplacement de l'ensemble formé par le raccord en T 34 et les vannes monovoie 35.

Il est par ailleurs parfaitement envisageable, sans sortir du cadre de l'invention, que le dispositif 1 constitue un ensemble mobile, de préférence portable, qui puisse être installé provisoirement à proximité du bassin d'agrément 2 pour permettre la ponction épisodique d'eau dans ledit bassin, afin par exemple d'arroser des espaces verts voisins. Plus précisément, on peut envisager de disposer sur un chariot l'unité de traitement 3 ainsi que la pompe 31, de manière à pouvoir aspirer les effluents dans le bassin 2 et les refouler à travers la chambre de réaction 4, puis à travers un tuyau d'arrosage raccordé à l'orifice de rejet 24.

L'invention concerne également un bassin d'agrément en lui-même, tel qu'une piscine ou un jeu d'eau, qui comporte un dispositif de traitement de ses effluents conforme à ce qui a été décrit précédemment, et de préférence un circuit de récupération 36 connecté en aval dudit dispositif 1.

La présente invention concerne également un produit destiné au traitement de l'eau d'un bassin d'agrément, tel qu'une piscine ou un jeu d'eau, ladite eau contenant une substance désinfectante destinée à limiter la prolifération d'organismes pathogènes et/ou inesthétiques dans ladite eau lors du fonctionnement normal dudit bassin d'agrément.

Selon l'invention, ledit produit comprend un mélange d'au moins une substance neutralisante choisie pour réagir chimiquement avec ladite substance désinfectante afin de réduire la teneur en substance désinfectante de ladite eau, et d'au moins un liant choisi pour permettre le compactage dudit mélange en vue de la présentation dudit produit sous forme d'agrégats.

De façon particulièrement préférentielle, la substance neutralisante comprend un sel de thiosulfate (S₂O₃²⁻), ou un sel d'hyposulfite (SO₂²⁻), le produit conforme à l'invention pouvant constituer un produit de neutralisation du chlore permettant de purifier l'eau d'une piscine.

Or, les produits connus à base de thiosulfate se présentent généralement sous une forme pulvérulente de granulométrie faible qui ne peut pas être compactée, les grains constituant la poudre ne pouvant être regroupés pour former un solide cohérent sous l'effet d'un tassement mécanique en raison même de la nature des espèces chimiques en présence. Pour surmonter cet obstacle technique, les inventeurs proposent donc l'utilisation d'un liant qui est destiné à former une matrice au sein de laquelle la substance neutralisante est insérée.

Il est envisageable que le liant soit formé par un matériau poreux rigide dont les pores sont remplis de poudre de thiosulfate, ou encore un matériau spongieux imbibé d'une solution aqueuse concentrée de thiosulfate, le thiosulfate se trouvant ainsi « *encagé* » dans la structure dudit matériau.

Toutefois, de façon préférentielle, le liant est choisi pour être malléable et permettre son mélange intime avec la substance neutralisante, puis son tassement sous forme de galets 7.

En outre, le liant est de préférence choisi pour être soluble dans l'eau de manière à ce que l'agrégat (galet 7) soit entièrement soluble et puisse se déliter progressivement lorsqu'il est immergé dans l'eau, et *a fortiori* dans les effluents du bassin 2, de sorte à pouvoir relâcher progressivement la substance neutralisante dans ladite eau.

De préférence, le liant est choisi parmi le groupe suivant : bromure de potassium, kaolin, acide borique, stéarate de sodium.

Parmi ce groupe, l'acide borique et le stéarate de sodium sont particulièrement préférés car particulièrement compatibles avec le compactage du mélange obtenu.

De façon particulièrement préférentielle, la substance neutralisante et le liant se présenteront tout deux sous une forme pulvérulente de manière à pouvoir être incorporés et mélangés intimement l'un à l'autre avant le compactage du mélange ainsi formé.

Bien entendu, les proportions en poids respectives du liant et de la substance désinfectante au sein du produit conforme à l'invention pourront faire l'objet de variations et d'adaptations, dès lors que la substance désinfectante se trouve en quantité suffisante pour procéder à la neutralisation recherchée dans des conditions d'utilisation prédéterminées et que le liant se trouve en quantité adéquate pour permettre la formation de galets cohérents.

Il est remarquable que le produit conforme à l'invention n'est pas limité au traitement des effluents d'un bassin d'agrément, mais peut également servir à traiter l'eau contenue et utilisée dans ledit bassin de manière à ajuster au sein du circuit fermé formé par ledit bassin la teneur en substance désinfectante, notamment pour l'équilibrage de l'eau lors de la première mise en service dudit bassin ou encore après un traitement « *de choc* ».

L'invention concerne également une nouvelle utilisation d'un produit de traitement de l'eau afin de neutraliser une substance désinfectante contenue dans les effluents d'un bassin d'agrément, c'est-à-dire dans l'eau évacuée hors dudit bassin et non dans l'eau séjournant dans ledit bassin (ou retournant à celui-ci).

Bien entendu, l'utilisation d'un produit de traitement de l'eau conforme à ce qui a été décrit précédemment est tout particulièrement indiquée au sein d'un dispositif 1 de traitement de l'eau d'un bassin d'agrément conforme à l'invention, sous forme de galets 7, afin de faire réagir la substance neutralisante 5 contenue dans ledit bassin avec la substance désinfectante contenue dans les effluents dudit bassin d'agrément pour réduire la teneur en substance désinfectante desdits effluents avant leur rejet.

L'invention concerne également un procédé de fabrication d'un produit de traitement de l'eau d'un bassin d'agrément, tel qu'une piscine ou un jeu d'eau, ladite eau comprenant une substance désinfectante destinée à limiter la prolifération d'organismes pathogènes et/ou inesthétiques dans ladite eau lors du fonctionnement normal dudit bassin d'agrément, ledit procédé de fabrication comprenant une étape (E1) de préparation au cours de laquelle on mélange d'une part une substance neutralisante choisie pour réagir chimiquement avec ladite substance désinfectante afin de réduire la teneur en ladite substance désinfectante de l'eau, avec d'autre part un liant choisi parmi le groupe suivant : : bromure de potassium, kaolin, acide borique, stéarate de sodium, puis une étape (E2) de compactage au cours de laquelle on comprime le mélange obtenu lors de l'étape de préparation afin de former un agrégat compact.

Bien entendu, au cours de l'étape (E1) de préparation, il est envisageable de mêler dans un malaxeur ou un agitateur une poudre de thiosulfate avec un liant se présentant sous une forme pulvérulente.

La présente invention concerne également un procédé de traitement des effluents d'un bassin d'agrément, tel qu'une piscine ou un jeu d'eau, lesdits effluents contenant de l'eau ainsi qu'une substance désinfectante destinée à limiter la prolifération d'organismes pathogènes et/ou inesthétiques dans ladite eau lors du fonctionnement normal dudit bassin d'agrément, ledit procédé comportant une étape (a) de traitement de traitement au cours de laquelle on réduit la teneur en substance désinfectante des effluents en faisant circuler lesdits effluents au contact d'une substance neutralisante 5 incorporée dans un substrat 6 solide se présentant sous la forme d'un ou plusieurs galets 7 de format(s) normalisé(s) disposés sur un support 14 pourvu d'un ou plusieurs logements individuels 18 conçus chacun pour accueillir un ou plusieurs desdits galets 7, puis une étape (b) de rejet au cours de laquelle on rejette les effluents traités dans hors dudit bassin.

Selon une caractéristique importante de l'invention, ledit procédé de traitement comprend une étape (c) de détermination de la charge en substrat, préalable à l'étape (a) de traitement, au cours de laquelle l'utilisateur sélectionne, parmi une pluralité de combinaisons pré-étalonnées, une combinaison d'un ou plusieurs logements individuels 18 et d'un ou plusieurs formats de galets 7 associés afin de définir le dosage en substance neutralisante 5.

Plus particulièrement, l'utilisateur peut sélectionner parmi un ou plusieurs jeu(x) de galets 7 de format(s) normalisé(s), le format et le nombre de galets approprié aux conditions d'utilisation de son bassin, à l'aide par exemple d'une notice ou d'un tableau établi par le constructeur, puis disposer le ou les galets 7 au sein des logements individuels 18 de forme(s) conjuguée(s) prévus à cet effet sur le support 14.

De préférence, l'étape (a) de traitement comporte, selon une caractéristique qui peut constituer une invention en tant que telle, une sous-étape (a1) de mise en contact au cours de laquelle on place les effluents sous flux laminaire et on met lesdits effluents en présence d'une substance neutralisante choisie pour réagir chimiquement avec ladite substance désinfectante afin de réduire sa teneur dans lesdits effluents, suivie d'une sous-étape (a2) de brassage au cours de laquelle on crée un écoulement turbulent des effluents de manière à entraîner le brassage de ces derniers.

Plus précisément, ledit procédé de traitement étant de préférence mis en oeuvre à l'aide d'un dispositif 1 conforme à l'invention, la sous-étape (a1) de mise en contact consiste à faire circuler les effluents dans la chambre de réaction 4 sur un lit de galets 7, de manière à ce que ces derniers se délitent au fur et à mesure du passage des effluents pour libérer progressivement une quantité juste nécessaire et suffisante de substance neutralisante, et plus précisément de thiosulfate, de manière à neutraliser, de préférence en totalité, le chlore libre présent dans lesdits effluents, de sorte que l'éventuelle concentration résiduelle dans les effluents traités soit inoffensive pour l'environnement.

De préférence, l'étape (b) de rejet constitue une étape de recyclage au cours de laquelle on utilise les effluents traités pour un usage différent de celui du bassin d'agrément, tel que par exemple l'irrigation.

Par ailleurs, l'étape (a) peut comprendre une sous-étape (a3) de rétention, précédant l'étape (b) de rejet, au cours de laquelle on maintient les effluents dans un circuit de rétention le temps nécessaire à l'accomplissement, voire à l'achèvement, de la réaction neutralisation.

Ainsi, le dispositif, le produit et le procédé de traitement conformes à l'invention permettent au propriétaire d'un bassin d'agrément, et plus particulièrement au détenteur d'une piscine privée, de réaliser de substantielles économies d'eau en recyclant les effluents issus des vidanges d'entretien de son bassin.

En outre, la neutralisation s'effectuant uniquement sur les effluents s'échappant du bassin, et non sur l'eau contenue dans le bassin, le dispositif et le procédé de traitement conformes à l'invention sont économes en réactifs.

Avantageusement, la présente invention contribue donc à rendre plus favorable le bilan économique et environnemental de nombreuses opérations d'entretien du bassin.

De surcroît, la mise en oeuvre du dispositif conforme à l'invention est particulièrement simple, intuitive, rapide, et l'exécution de la neutralisation facile à contrôler par l'observation de l'usure des galets.

Plus particulièrement, la possibilité de réglages très variés offerte par la combinaison d'un support 14 comportant une pluralité de logements individuels 18 normalisés et d'un ou plusieurs jeux de galets 7 de format(s) normalisé(s) correspondant(s) simplifie et optimise l'utilisation du dispositif 1, en permettant à l'utilisateur de moduler la charge en substrat 6 selon un grand nombre de configurations prédéterminées.

En outre, la mise en oeuvre de cette invention peut être particulièrement discrète et esthétique, le dispositif 1 pouvant s'intégrer harmonieusement aux structures existantes de purge des bassins déjà installés.

La présente invention constitue par conséquent une véritable incitation à respecter l'environnement et les ressources naturelles.

## Revendications

1. - Dispositif (1) de traitement des effluents d'un bassin d'agrément (2), tel qu'une piscine ou un jeu d'eau, lesdits effluents contenant de l'eau ainsi qu'une substance désinfectante destinée à limiter la prolifération d'organismes pathogènes et/ou inesthétiques dans ladite eau lors du fonctionnement normal dudit bassin, ledit dispositif (1) comportant une unité de traitement (3) conçue pour réduire la teneur en substance désinfectante des effluents avant le rejet de ces derniers hors dudit bassin d'agrément (2), ladite unité de traitement (3) comportant une chambre de réaction (4) conçue pour contenir une substance neutralisante (5) destinée à réagir chimiquement, par exemple par oxydoréduction, avec la substance désinfectante, ledit dispositif (1) étant **caractérisé en ce que** ladite substance neutralisante (5) est incorporée dans ou sur un substrat (6) solide au contact duquel les effluents sont destinés à circuler, **en ce que** ledit substrat (6) solide est formé par un ou plusieurs galets se présentant sous un ou plusieurs formats normalisés, et **en ce que** la chambre de réaction (4) dispose d'un support (14) qui présente un ou plusieurs logements individuels (18) conçus chacun pour accueillir un ou plusieurs desdits galets (7) et dont la capacité d'accueil définit, pour l'un et/ou l'autre desdits formats de galets (7) normalisés, un dosage prédéterminé de la substance neutralisante (5).

2. - Dispositif selon la revendication 1 **caractérisé en ce que** les logements individuels (18) sont dimensionnés pour accueillir chacun au plus un unique galet (7) de format normalisé correspondant.

3. - Dispositif selon la revendication 2 **caractérisé en ce que** les logements individuels (18) sont formés par des empreintes de forme conjuguée à celle du galet (7) qu'ils sont destinés à accueillir.

4. - Dispositif selon l'une des revendications précédentes **caractérisé en ce qu'**il comporte au moins deux, et de préférence au moins trois logements individuels (18) identiques.

5. - Dispositif selon l'une des revendications précédentes **caractérisé en ce que** le volume des galets (7) est compris entre 40 cm³ et 160 cm³.

6. - Dispositif selon l'une des revendications précédentes **caractérisé en ce que** la substance désinfectante contient du chlore dit « *libre* » sous forme d'ion hypochlorite (CIO⁻).

7. - Dispositif selon l'une des revendications précédentes **caractérisé en ce que** la substance neutralisante (5) comprend un sel de thiosulfate (S₂O₃ ²⁻) ou un sel d'hyposulfite (SO₂²⁻).

8. - Dispositif selon l'une des revendications précédentes **caractérisé en ce que** les galets (7) sont solubles dans l'eau.

9. - Dispositif selon l'une des revendications précédentes **caractérisé en ce que** les galets (7) sont issus du compactage d'un mélange pulvérulent d'au moins une substance neutralisante (5) et d'au moins un liant choisi parmi le groupe suivant : bromure de potassium, kaolin, acide borique, stéarate de sodium.

10. - Dispositif selon l'une des revendications précédentes **caractérisé en ce que** la chambre de réaction (4) dispose d'un moyen d'accès (10) permettant l'ajout, le renouvellement ou l'extraction du substrat (6).

11. - Dispositif selon l'une des revendications précédentes **caractérisé en ce que** l'unité de traitement (3) comporte au moins une fenêtre transparente (20) agencée pour permettre un contrôle visuel de l'état du substrat (6) disposé au sein de ladite chambre de réaction (4).

12. -Dispositif selon l'une des revendications précédentes **caractérisé en ce que** la chambre de réaction (4) est étagée, par rapport au sens d'écoulement (F) des effluents, en une zone amont (21) et une zone aval (22), la zone amont étant agencée pour que l'écoulement des effluents soit sensiblement laminaire (F_{L}) lorsque ces derniers rencontrent la substance neutralisante (5), et la zone aval (22) étant agencée pour induire des turbulences (F_{T}) dans l'écoulement de manière à entraîner le brassage des effluents après que ces derniers ont été mis en présence de la substance neutralisante (5).

13. -Dispositif selon l'une des revendications précédentes **caractérisé en ce que** le support (14) forme dans la chambre de réaction (4) une chicane marquant la transition entre la zone amont (21) et la zone aval (22).

14. - Dispositif selon la revendication 13 **caractérisé en ce que** la chambre de réaction se présente sensiblement sous la forme d'une coque cylindrique (11), pourvue d'au moins un orifice d'admission (23) des effluents et d'au moins un orifice de rejet (24) desdits effluents, **en ce que** ladite coque (11) s'étend entre une première paroi de fond (25), au niveau de laquelle débouche l'orifice d'admission (23), et une seconde paroi de fond (26) pleine, **en ce que** le support (14) du substrat est formé par une plaque (15) placée au contact de ladite première paroi de fond (25) et orientée sensiblement parallèlement à un plan sagittal de ladite coque (11), de manière à ce que l'orifice admission (23) et l'orifice de rejet (24) se trouvent de part et d'autre de la cloison ainsi formée, respectivement en vis-à-vis de la zone amont (21) et de la zone aval (22) ainsi définies, et **en ce qu'**un ou plusieurs passages (27) sont ménagés entre l'extrémité de la plaque (15) et la seconde paroi de fond (26), de telle manière que les effluents soient contraints de contourner la plaque (15) pour passer de la zone amont (21) à la zone aval (22).

15. - Dispositif selon l'une des revendications précédentes **caractérisé en ce que** l'unité de traitement (3) est dimensionnée de telle sorte que le temps de séjour des effluents en son sein avant leur rejet est supérieur ou égal à 2 secondes, et de préférence compris entre 5 et 15 secondes, à compter de l'entrée en contact desdits effluents avec la substance neutralisante (5).

16. -Dispositif selon l'une des revendications précédentes **caractérisé en ce qu'**il constitue un ensemble mobile, et de préférence portable.

17. - Produit destiné au traitement de l'eau d'un bassin d'agrément, tel qu'une piscine ou un jeu d'eau, ladite eau contenant une substance désinfectante destinée à limiter la prolifération d'organismes pathogènes et/ou inesthétiques dans ladite eau lors du fonctionnement normal dudit bassin d'agrément, ledit produit étant **caractérisé en ce qu'**il comprend un mélange d'au moins une substance neutralisante choisie pour réagir chimiquement avec ladite substance désinfectante afin de réduire sa teneur en substance désinfectante de ladite eau, et d'au moins un liant choisi parmi le groupe suivant : bromure de potassium, kaolin, acide borique, stéarate de sodium, pour permettre le compactage dudit mélange en vue de la présentation dudit produit sous forme d'agrégats.

18. -Produit selon la revendication 17 **caractérisé en ce que** la substance neutralisante comprend un sel de thiosulfate (S₂0₃²⁻) ou un sel d'hyposulfite (SO₂²⁻).

19. - Bassin d'agrément, tel qu'une piscine ou un jeu d'eau, **caractérisé en ce qu'**il comporte un dispositif de traitement de ses effluents selon l'une des revendications 1 à 15.

20. - Bassin d'agrément selon la revendication 19 **caractérisé en ce qu'**il est pourvu d'un circuit de récupération (36) connecté en aval du dispositif (1) de traitement des effluents en vue du recyclage des effluents traités, par exemple pour l'irrigation.

21. - Procédé de traitement des effluents d'un bassin d'agrément, tel qu'une piscine ou un jeu d'eau, lesdits effluents contenant de l'eau ainsi qu'une substance désinfectante destinée à limiter la prolifération d'organismes pathogènes et/ou inesthétiques dans ladite eau lors du fonctionnement normal dudit bassin d'agrément, **caractérisé en ce qu'**il comporte une étape (a) de traitement au cours de laquelle on réduit la teneur en substance désinfectante des effluents en faisant circuler lesdits effluents au contact d'une substance neutralisante (5) incorporée dans un substrat (6) solide se présentant sous la forme d'un ou plusieurs galets (7) de format(s) normalisé(s) disposés sur un support (14) pourvu d'un ou plusieurs logements individuels (18) conçus chacun pour accueillir un ou plusieurs desdits galets (7), puis une étape (b) de rejet au cours de laquelle on rejette les effluents traités dans hors dudit bassin, et **en ce qu'**il comprend une étape (c) de détermination de la charge en substrat (6) au cours de laquelle l'utilisateur sélectionne, parmi une pluralité de combinaisons pré-étalonnées, une combinaison d'un ou plusieurs logements individuels (18) et d'un ou plusieurs formats de galets (7) associés afin de définir le dosage en substance neutralisante (5).

22. - Procédé de traitement d'effluents selon la revendication 21 **caractérisé en ce que** l'étape (a) de traitement comporte une sous-étape (a1) de mise en contact au cours de laquelle on place les effluents sous flux laminaire et on met lesdits effluents en présence d'une substance neutralisante choisie pour réagir chimiquement avec ladite substance désinfectante afin de réduire sa teneur dans lesdits effluents, suivie d'une sous-étape (a2) de brassage au cours de laquelle on crée un écoulement turbulent des effluents de manière à entraîner le brassage de ces derniers.

23. - Procédé de traitement d'effluents selon la revendication 21 ou 22 **caractérisé en ce que** l'étape (b) de rejet constitue une étape de recyclage au cours de laquelle on utilise les effluents traités pour un usage différent de celui du bassin d'agrément, tel que par exemple l'irrigation.
